# DEMANDE DE BREVET EUROPEEN

(11) **EP 0 872 391 A2**
(43) Date de publication de la demande: **21.10.1998**
(21) Numéro de dépôt: 98870083.7
(22) Date de dépôt: 15.04.1998
(51) Int. Cl.: B60R 25/00, E05C 19/18

(54) **Serrure de sûreté**

(30) Priorité: 15.04.1997 BE 9700347
(71) Demandeur: G-BLOCK S.A., 7822 Ghislenghien (ATH) (BE)
(72) Inventeur: Gonzalez-Navarro, Miguel, 7830 Hoves Silly (BE); Gonzalez-Navarro, Santiago, 7830 Hoves Silly (BE)
(74) Mandataire: Quintelier, Claude

(57) **Abrégé**

Serrure de sûreté comportant au moins une tige (9,10) pourvue d'encoches (11) dans lesquelles prend prise un pêne (5,6), ladite tige (9,10) étant agencée pour être déplacée à l'intérieur d'un boîtier (12,13), ledit pêne (5,6) étant monté sur un organe de commande, agencé pour dans une première position maintenir le pêne (5,6) en contact avec l'encoche (11).

## Description

L'invention concerne une serrure de sûreté comportant au moins une tige pourvue d'encoches dans lesquelles prend prise un pêne, ledit pêne étant monté sur un organe de commande, agencé pour dans une première position maintenir le pêne en contact avec l'encoche.

Une telle serrure de sûreté est connue de la demande de brevet PCT/BE95/00049 (WO 95/32109). La tige dont est pourvue la serrure permet de verrouiller la serrure et donc l'objet sur lequel elle est montée en différentes positions. La serrure connue est montée sur un siège d'un véhicule et permet de bloquer le siège en différentes positions le rendant ainsi inutilisable ce qui lui procure une fonction d'antivol.

Un désavantage de la serrure connue est que la tige et donc le pêne sont facilement accessibles ce qui permet de les forcer sans trop de contraintes.

L'invention a pour but de réaliser une serrure de sûreté plus fiable.

A cette fin une serrure de sûreté suivant l'invention est caractérisée en ce que ladite tige est agencée pour être déplacée à l'intérieur d'un boîtier où est également logé ledit organe de commande qui est agencé pour dans une deuxième position maintenir le pêne écarté de la tige. Puisque la tige et l'organe de commande sont maintenant à l'intérieur d'un boîtier ils ne sont plus accessibles et donc moins vulnérables. De plus, la commande de la serrure est facilitée en maintenant le pêne écarté de la tige.

Une première forme de réalisation préférentielle d'une serrure suivant l'invention est caractérisée en ce que ledit organe de commande comporte un disque ayant sur une face au moins une patte qui coopère avec ledit pêne de telle façon à le maintenir en contact avec l'encoche lorsque ledit organe de commande est en première position. Une simple et fiable réalisation de l'organe de commande est ainsi obtenue.

Une deuxième forme de réalisation préférentielle d'une serrure suivant l'invention est caractérisée en ce que les encoches ont un profil comprenant une première partie inclinée et une deuxième partie droite, disposées de telle façon à coopérer avec le pêne.

De préférence le disque comporte une autre encoche sur sa partie périphérique agencée à coopérer avec une unité de déclenchement de la tige. Ceci permet de maintenir le déverrouillage de la serrure tant que la tige n'est pas totalement rétractée.

L'invention sera maintenant décrite plus en détail à l'aide des dessins qui illustrent un exemple de réalisation d'une serrure de sûreté suivant l'invention. Dans les dessins la :
figure 1 illustre une vue en coupe de la serrure suivant l'invention;
figure 2 et la figure 3 illustrent un disque faisant partie de la serrure suivant l'invention;

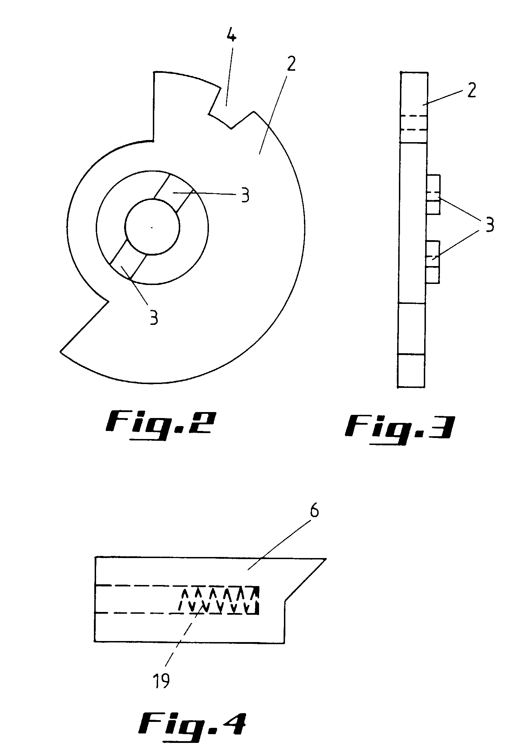

figure 4 illustre des pênes;

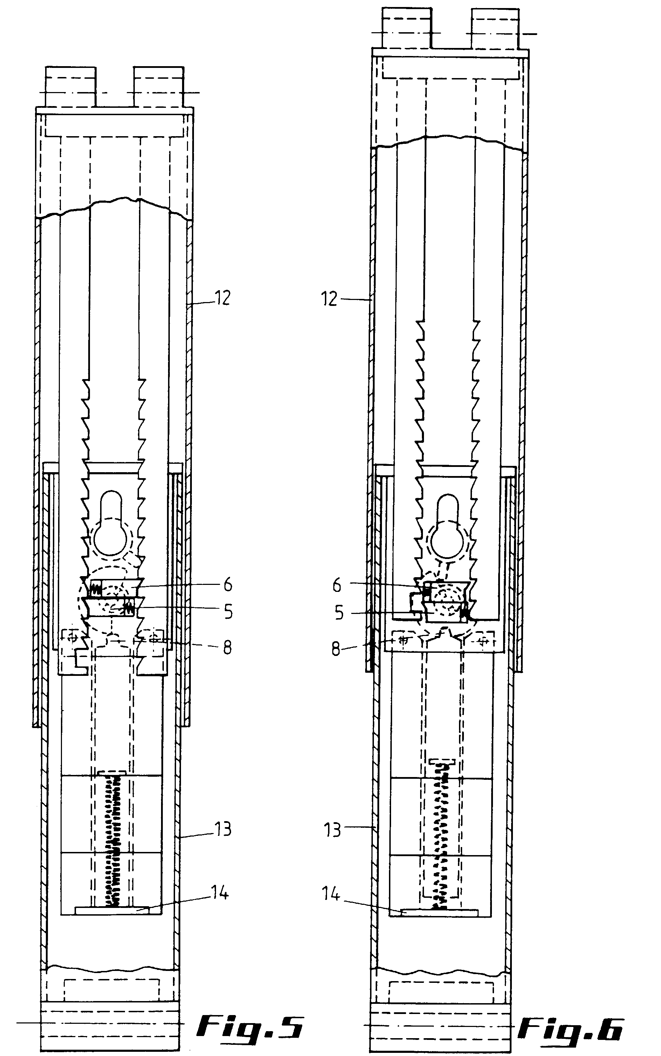

figure 5 illustre la serrure en position verrouillée;
figure 6 illustre la serrure en position déverrouillée.

Dans les dessins une même référence a été attribuée à un même élément ou à un élément analogue.

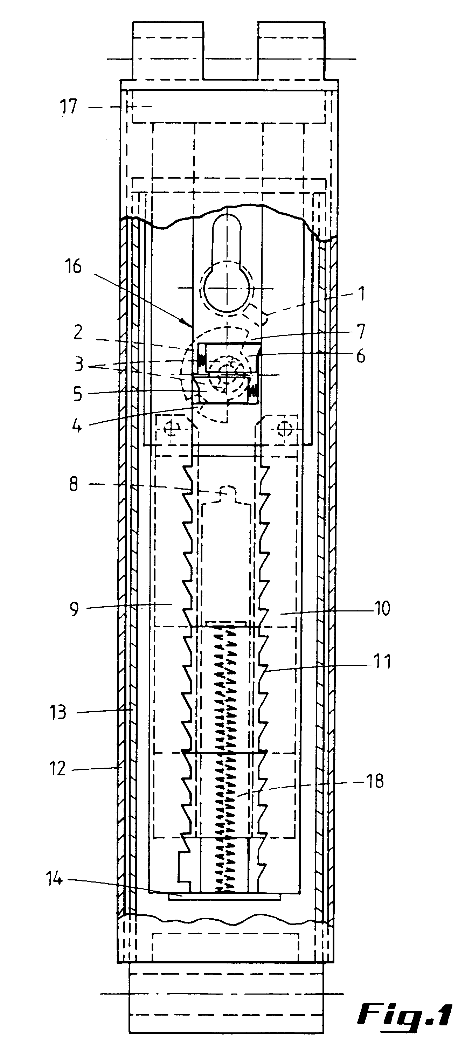

La serrure de sûreté suivant l'invention et illustrée à la figure 1 comporte un premier 12 et un second 13 boîtier où le premier boîtier coulisse par rapport au second. En position ouverte, telle qu'illustrée à la figure 1, le premier boîtier recouvre pratiquement entièrement le second. Ainsi tout le système de verrouillage et déverrouillage de la serrure se trouve à l'intérieur du second boîtier.

Le second boîtier comporte de préférence deux tiges 9 et 10. Toutefois une seule tige pourrait suffir pour faire fonctionner la serrure, mais l'emploi de deux tiges accroît la fiabilité de la serrure. Chaque tige est munie d'une série d'encoches 11 qui s'étendent sur à peu près la moitié inférieure de la longueur de la tige. Les encoches sont disposées sur la face orientée vers l'intérieur du boîtier de telle façon à ce que les deux tiges puissent être commandées par un même organe de commande 16. Les deux tiges s'étendent en parallèle à l'intérieur du premier boîtier et sont reliées à hauteur de leur partie supérieure par un barrette 17.

Un déclencheur 14 est monté au fond du second boîtier. Ce déclencheur comporte un ressort 18 sur lequel est monté un élément 8 qui de ce fait suit le mouvement du ressort. L'élément 8 est agencé pour prendre prise dans une encoche 4 de l'organe de commande 16.

L'organe de commande 16 comporte un disque 2 comme illustré aux figures 2 et 3. Le disque est pourvu de l'encoche 4 et d'une autre encoche 7 toutes deux disposées sur le périmètre du disque. Le disque est également pourvu de deux pattes 3 disposées sur une des faces autour du centre. Les pattes sont situées vis à vis l'une de l'autre et sont de préférence identiques ce qui facilite leur fabrication. L'organe de commande comporte également un panneton 1 qui est de préférence commandé par une clef (non repris dans les dessins). Le panneton 1 prend prise dans l'encoche 7. Les pattes 3 prennent chacune prise dans un pêne 5 et 6 qui coopèrent avec les encoches de la tige. Les encoches ont un profil comprenant une première partie inclinée et une deuxième partie droite de telle façon à permettre la coopération avec les pênes.

La rotation d'un quart de tour du panneton par la clef ou de tout autre type de mécanisme, provoque une rotation d'un quart de tour du disque 2, qui est placé sur sa course, puisque le panneton prend prise dans l'encoche 7. Le disque est ainsi tourné à partir d'une première position qui correspond au mode verrouillé vers une deuxième position qui correspond au mode déverrouillé. Ainsi le mouvement du panneton va placer l'encoche 4 face à l'élément 8 et maintenir une partie de l'ensemble en mode déverrouillé.

Pour actionner la serrure, le premier boîtier 12 est déplacé par rapport au second 13. Durant ce mouvement les pênes 5 et 6 passent le long des encoches 11. En effet le profil des encoches et des pênes est tel que lorsque le premier boîtier remonte par rapport au second, les pênes sont chaque fois déplacés vers l'organe de commande par le profil des encoches qui remontent. Les pênes sont d'ailleurs montés sur des ressorts 19 qui prennent prise sur les pattes 3 pour permettre de suivre le mouvement que leur impose le profil des encoches 11. La forme dentée des pênes correspond à celle des encoches 11 de telle sorte qu'un pêne puisse se loger dans une encoche 11 permettant ainsi de verrouiller les pênes dans les encoches successives.

Lorsque le premier boîtier 12 est arrivé au bout de course, le déclencheur 14 se trouve en position détendue et l'élément 8 prend prise dans l'encoche 4 du disque 2 comme illustré à la figure 6. Ainsi le disque reste bloqué dans cette position et les pênes prennent prise dans les encoches 11 de la tige.

Pour utiliser la serrure suivant l'invention, l'utilisateur va déplacer le premier boîtier pour l'amener dans la position voulue. L'utilisateur veille bien entendu à bloquer le premier boîtier dans une position où les pênes 5 et 6 sont complètement engagés dans une encoche 11 de la tige 10. Repousser le premier boîtier en sens inverse n'est alors pas possible sans manipuler l'organe de commande. En effet puisque les pênes sont engagés dans les encoches, la partie horizontale ou droite de l'encoche 11 bute contre la partie horizontale des pênes 5 et 6 lorsqu'on tente de repousser le premier boîtier. Le verrouillage de serrure de sûreté est ainsi assuré.

Pour ouvrir la serrure il faut actionner l'organe de commande de façon à dégager les pênes des encoches 11. A cette fin le panneton 1 fait tourner le disque. La rotation du disque 2 provoque celle des pattes 3 qui vont à leur tour entraîner les deux pênes 4 et 5 en sens inverse. Lesdits pênes libèrent le mouvement de rétraction des tiges 9 et 10 du premier boîtier. Une des particularités du déverrouillage se situe au niveau de l'encoche 4 et de l'élément 8 qui maintiennent le déverrouillage, tant que les tiges 9 et 10 ne sont pas totalement rétractées et n'ont pas buté contre le déclencheur 14.

La serrure de sûreté suivant l'invention est en particulier destinée au verrouillage de sièges de véhicules. Elle est montée entre une partie fixe du siège reliée au châssis du véhicule et une partie mobile du siège permettant de rabattre soit l'assise soit l'ensemble du siège contre le volant. Le siège ainsi verrouillé sert d'antivol au véhicule. La serrure de sûreté suivant l'invention permet un blocage efficace du siège contre le volant.

## Revendications

1. Serrure de sûreté comportant au moins une tige pourvue d'encoches dans lesquelles prend prise un pêne, ledit pêne étant monté sur un organe de commande, agencé pour dans une première position maintenir le pêne en contact avec l'encoche, caractérisée en ce que ladite tige est agencée pour être déplacée à l'intérieur d'un boîtier où est également logé ledit organe de commande qui est agencé pour dans une deuxième position maintenir le pêne écarté de la tige.

2. Serrure de sûreté suivant la revendication 1, caractérisée en ce que ledit organe de commande comporte un disque ayant sur une face au moins une patte qui coopère avec ledit pêne de telle façon à le maintenir en contact avec l'encoche lorsque ledit organe de commande est en première position.

3. Serrure de sûreté suivant la revendication 2 caractérisée en ce que ladite patte coopère avec ledit pêne de telle façon à le maintenir écarté de la tige lorsque l'organe de commande est en deuxième position.

4. Serrure de sûreté suivant l'une des revendications 1 à 3, caractérisée en ce que les encoches ont un profil comprenant une première partie inclinée et une deuxième partie droite, disposées de telle façon à coopérer avec le pêne.

5. Serrure de sûreté suivant la revendication 2, caractérisée en ce que le disque comporte une autre encoche sur sa partie périphérique agencée à coopérer avec une unité de déclenchement de la tige.

6. Serrure de sûreté suivant l'une des revendications 1 à 5, caractérisée en ce qu'elle est destinée à verrouiller un siège de véhicule.
